# EUROPÄISCHE PATENTSCHRIFT

(11) **EP 1 997 277 B1**
(45) Veröffentlichungstag und Bekanntmachung des Hinweises auf die Patenterteilung: **22.09.2010**
(21) Anmeldenummer: 07710809.0
(22) Anmeldetag: 19.03.2007
(51) Int. Cl.: H04L 12/28, E21F 17/18, G08B 21/02, H04M 1/725, H04W 28/18, H04W 8/26, H04W 84/08

(54) **VERFAHREN UND GERÄT ZUR KOMMUNIKATION ZWISCHEN EINER VIELZAHL VON MOBILSTATIONEN UND EINEM STATIONÄREN NETZWERK UNTER TAGE**
METHOD AND APPLIANCE FOR COMMUNICATION BETWEEN A LARGE NUMBER OF MOBILE STATIONS AND A FIXED NETWORK UNDERGROUND
PROCEDE ET APPAREIL POUR LA COMMUNICATION ENTRE UN GRAND NOMBRE DE STATIONS MOBILES ET UN RÉSEAU STATIONNAIRE SOUTERRAIN

(30) Priorität: 21.03.2006 CH 4392006
(43) Veröffentlichungstag der Anmeldung: 03.12.2008
(73) Patentinhaber: Licania GmbH, 5036 Oberentfelden (CH)
(72) Erfinder: HUNZIKER, Christoph, 5036 Oberentfelden (CH)
(74) Vertreter: Liebetanz, Michael
(86) Internationale Anmeldenummer: PCT/CH2007/000150
(87) Internationale Veröffentlichungsnummer: WO 2007/107029

(56) Entgegenhaltungen:
- EP-A- 0 386 417
- EP-A1- 0 638 878
- DE-A1- 19 719 955
- US-A1- 2005 246 738

## Beschreibung

Die Erfindung betrifft ein Verfahren und ein Gerät zur drahtlosen Untertagedatenübertragung zwischen einer Vielzahl von Mobilstationen und einem stationären Netzwerk.

Im tägliche Leben ist das Mobiltelefon längst zu einem festen Bestandteil geworden. In untertägigen Bereichen hingegen sind Mitarbeiter oft eine ganze Schicht nicht erreichbar, was oft zu Verzögerungen, unnötig erhöhten Kosten und Produktionsausfällen führt.

Für die Sprachkommunikation in Büroumgebungen und zunehmend auch im privaten Bereich wird in immer stärkerem Umfang das "VoIP" ("Voice-over-IP") Verfahren eingesetzt, wobei als Übertragungsmedium Ethernet oder drahtloses Ethernet ("WLAN") zum Einsatz kommt. Dies ist auch bereits in einigen Installationen in Bergwerken der Fall.

Das hier vorgestellte Verfahren beschreibt die Kommunikation von Mitarbeitern und Maschinen unter Tage untereinander und mit zentralen Einrichtungen. Es setzt die Ausrüstung eines Bergwerkes mit einer stationären digitalen Kommunikationsinfrastruktur voraus. Diese kann auf Mobilfunktechniken (GSM, UMTS) aber auch auf drahtlosen Netzwerktechniken (wie z.B. "WLAN" nach IEEE802.11 oder WiMAX) basieren.

EP0638878 beschreibt ein Verfahren zur Lokalisierung von Fahrzeugen oder Personen im Untertagebau, das eine Kontrollstation und mehrere tragbare Identifikationsstationen mit Funkkommunikationmodul umfasst. Ein Person- oder Fahrzeugspezifischer Code wird zur Personalisierung beim Inbetriebnehmen eingegeben.

Hat der Mitarbeiter unter Tage erst eine Kommunikationsverbindung und ein entsprechendes Gerät, so kann dieses Gerät neben der reinen Telefonieanwendung auch weitere Funktionen übernehmen, was mit dieser Erfindung unter Schutz gestellt werden soll: Das dazugehörige Gerät stellt eine persönliche oder maschinengebundene Kommunikations- und Rechenplattform dar, die in verschiedenen Ausführungen als untertagetaugliches Mobiltelefon, als Einbaugerät für Maschinen und als "wearable device" in Kleidungsstücken, dem Helm oder einer Grubenlampe eingebaut sein kann. Dieses Gerät übernimmt neben der Telefonie und / oder dem Austausch von datenbasierten Kurzmitteilungen auch die im Verfahren beschriebenen Zusatzfunktionen des Mobilteils für das Kommunikationssystem. Durch diese Zusatzfunktionen wird aus einem "regulären" Mobiltelefon ein Gerät, welches für den Untertageeinsatz verwendbar wird und daneben einen anwendungsspezifischen Mehrwert schafft und den Bergmann bei seiner individuellen täglichen Arbeit unterstützt. Solche Funktionen sind beispielsweise aber nicht ausschliesslich:
- Nutzung der Mobilteile durch unterschiedliche Personen und Personalisierung der Geräte am Schichtbeginn
- Notfallfunktionen, mit denen ein Bergwerk gezielt evakuiert werden kann
- "location based services", die ortsabhängig unter Tage den Nutzer über temporäre oder permanente Gefahren warnen und ggf. Messwerte (z.B. Gaskonzentrationen etc) bereitstellen.
- Funktionen für die Zusammenarbeit in Arbeitsgruppen (z.B. "Gegensprechfunktion")
- Erreichbarkeit unter verschiedenen Nummern auf einem Gerät (z.B. eine Nummer für den "Arbeitsbereich" oder die Maschine und eine weitere persönliche Nummer des Nutzers
- Steuerungsfunktionen für Maschine
- Individuelle Rechenanwendungen für den Arbeitsplatz des einzelnen Mitarbeiters.

Das grundlegende Verfahren der Einrichtung einer drahtlosen Untertagedatenübertragung kann auch wie folgt zusammengefasst oder gekennzeichnet werden.
- jede einsatzfähige Mobilstation ist vor ihrem Einsatz in einer Lagerstation funktionsunfähig gelagert, vorteilhafterweise in einer Ladestation,
- während oder nach der Entnahme der Mobilstation wird die Identifikation eines Nutzers an der Lagerstation oder an der Mobilstation vorgenommen,
- eine Benutzerkennung zu einer Gerätekennung der Mobilstation wird in einem zentralen Server vorgenommen,
- das Gerät oder von Teilen des Gerätes wird durch einen Freischaltcode vom zentralen Server aus oder durch die folgende Übertragung der nutzerbezogenen Informationen freigeschaltet,
- zusätzlich kann optional eine Übertragung von nutzerbezogenen Informationen oder Programmen von Zentralsystemen zu der Mobilstation vor oder während der Nutzung der Mobilstation stattfinden,
- bei der Beendigung der Nutzung werden nutzerspezifische Informationen auf das Zentralsystem zurückübertragen oder gelöscht und die Nutzerzuordnung im Zentralsystem selber wird bei Rückgabe in die Lagerstation gelöscht; eine Lösung der nutzerspezifischen Informationen ist beispielsweise dann sinnvoll, wenn es sich um nicht veränderbare oder nicht veränderte Profilinformationen handelt.

Bei nutzerbezogener Information kann es sich insbesondere um zu der entsprechenden Person selber einzeln zugehörige oder arbeitsgruppenzugehörige oder arbeitsortzugehörige ausgebbare Informationen handeln, die beispielsweise ein Benutzerprofil umfassen, welches gleichzeitig mit oder zur Freischaltung an eine Mobilstation übertragen wird.

Das Verfahren beschreibt einerseits die Nutzung der Geräte und andererseits die Funktionalität des Gesamtsystems, welche eng mit der Nutzung verknüpft ist.

Für die Nutzung des Verfahrens werden zwei verschiedene Methoden unterschieden:
1. Der Mitarbeiter nutzt ein persönliches Gerät, welches ihm über eine gesamte Schicht (ähnlich wie ein Filterselbstretter oder eine Grubenlampe) zugeordnet ist.
2. Der Mitarbeiter (z.B. ein "Maschinenfahrer") nutzt ein fest (z.B. auf einer Maschine) installiertes Kommunikationsgerät. Dabei kann es sein, dass der Maschinenfahrer während einer Schicht die Maschinen wechselt.

Gemeinsam für beide Methoden ist die Vorgehensweise, dass ein erfindungsgemässes Gerät für die Kommunikation unter Tage bereitstehen muss.

Der Nutzungsablauf besteht aus vier Schritten:
1. vorgängiger und/oder nachgängiger Einsatz von Ladeeinrichtungen für die persönlichen Kommunikationsgeräte über Tage (Entfällt bei stationären oder fest in Maschinen eingebauten Geräten)
2. Personalisierung eines Gerätes für den Einsatz oder Zuordnung eines Gerätes zu einer individuellen Person für den Einsatz: a.) Freigabe des Gerätes oder von Teilen des Gerätes durch einen Freischaltcode, z.B. von einem zentralen Rechner aus, womit verhindert wird, dass das Gerät unbefugt (zum Beispiel "zu Hause") verwendet wird; b.) Übertragung von nutzerspezifischen Programmen und Einstellungen auf das Gerät von einem zentralen Rechner aus.
3. Nutzung des Gerätes, ggf. unter Beachtung von datenschutzrechtlichen Anonymisierungsroutinen zur Verhinderung von "Personenverfolgung" im Normalbetrieb
4. Entpersonalisierung nach erfolgtem Einsatz oder Rückübertragung der persönlichen Einstellungen auf den Server und Deaktivierung des Gerätes durch Lösen der Verbindung zu einem spezifischen Nutzer nach erfolgtem Einsatz.

Wird das Gerät nach einer bestimmten Zeit in die Ladestation zurückgelegt und erfolgt damit keine offizielle Entpersonalisierung, so kann das Gerät seine Funktion einstellen, da es davon ausgehen muss, dass eine missbräuchliche Nutzung (beispielsweise "zu Hause") stattfindet. Damit wird das im Bergbau sehr populäre Entwenden von Geräten wirkungsvoll verhindert.

Da die feste Zuordnung eines Gerätes zu einer Person im Tagesbetrieb schlecht möglich ist und immer sichergestellt werden muss, dass das Personal mit vollgeladenen Geräten einen Einsatz beginnt, werden über Tage zentrale Ladeeinrichtungen vorgesehen. In diesen Ladeeinrichtungen werden die Mobiltelefone (deren Akkus) entweder über elektrische Kontakte oder drahtlos (induktiv) aufgeladen.

Wird ein Gerät aus der Ladeeinrichtung entnommen, so muss der entnehmende Mitarbeiter persönlich dem Gerät zugeordnet werden, was als Personalisierung des Gerätes bezeichnet wird. Eigentlich wird dabei nicht das Gerät selbst "personalisiert" - es ist immer über seine Netzwerkadresse erreichbar. Bei diesem Vorgang wird vielmehr in einem zentralen Rechner die Telefonnummer des Mitarbeiters mit der Hardware- oder Netzwerkadresse des Telefons verknüpft. Dies kann auch dergestalt geschehen, dass z.B. in der Telefonanlage oder in einem zentralen Rechner die "normale" Bürotelefonnummer auf die Netzwerkadresse des Untertagetelefons umgeleitet wird. Damit erhält das Gerät seine virtuelle "Telefonnummer", unter der es während der Einsatzzeit erreichbar ist. Diese Personalisierung kann entweder über die Eingabe einer Kennung zusammen mit einem PIN-Code am Telefon selbst oder auch elektronisch über Zusatzgeräte erfolgen: Diese können so gestaltet sein, dass der Mitarbeiter seinen persönlichen elektronischen Kennbaustein ("RFID-Chip", "Personalkarte" etc) gleichzeitig mit dem Telefon in ein elektronisches Gerät einlegt, welches daraufhin das Mobiltelefon auf den Mitarbeiter konfiguriert.

Dieses "Personalisierungsgerät" kann auch direkt mit der Ladestation kombiniert oder mit dieser vernetzt sein. Damit würde die Ladestation ein Gerät erst dann mechanisch für den Einsatz freigeben, wenn die Personalisierung erfolgreich durchgeführt wurde.

Die Konfiguration kann folgendermassen ablaufen:
1.) Die Ladestation wählt ein geeignetes Mobiltelefon nach den Kriterien Ladezustand und Nutzungshäufigkeit aus: Dabei wird z.B. ein vollgeladenes Telefon welches am längsten nicht benutzt wurde bevorzugt.
2.) Das Mobiltelefon oder das Personalisierungsgerät teilt dem zentralen Server die Daten des des zuzuordnenden Mitarbeiters mit.
3.) Der zentrale Server ordnet der Adresse des Mobiltelefons eine Telefonnummer des Mitarbeitenden zu. Danach ist das Telefon unter dieser Nummer erreichbar. Existiert ggf. für den Mitarbeiter eine konventionelle Rufnummer, so kann der Server veranlassen, dass diese in der Telefonanlage auf das Mobiltelefon umgeleitet wird.

Bei der Personalisierung erfolgt gleichzeitig auch ein Laden von weiteren nutzungsabhängigen Informationen und Programme von zentralen Serversystemen. Derartige Informationen können beispielsweise sein:
- Aktuelle allgemeine betriebliche Schichtinformationen aller Art, die als Textmessages auf dem Mobiltelefon dargestellt werden können. Diese Mitteilungen liest der Mitarbeiter und ist über die aktuellsten Betriebsmitteilungen informiert. Dabei können für verschiedene individuelle Nutzer und begrenzte Nutzergruppen individuelle Mitteilungen hinterlegt werden.

- Informationen über den Aufgabenbereich des spezifischen Mitarbeiters und auszuführende Arbeiten etc, welche als Textmitteilungen auf das Mobiltelefon geladen werden: Arbeitspläne, Übergabemitteilungen etc.
- Allgemeine Sicherheits- und Betriebsinformationen wie z.B. "Schacht 7 wegen Wartung gesperrt"
- News und andere Mitteilungsarten, die der Mitarbeiter für seine individuelle Nutzung im Netzwerk "abonniert" hat.
- Zugehörigkeit zu bestimmten PTT-Gruppen (Push-To-Talk-Gruppen).
- Anwendungsprogramme, welche für die Unterstützung der Tätigkeit des Mitarbeiters benötigt werden. Damit werden z.B. unterschiedliche Programme für Logistikmitarbeiter, Maschinenführer, Steiger etc. auf das Kommunikationsgerät geladen. Damit wird das Telefon zu einem Microrechner, der eingeschränkte Hilfsfunktionen aus dem Arbeitsbereich des Bedieners übernimmt oder z.B. den Dialog des Bedieners mit seiner Maschine übernimmt. Diese Programme können dann auch den Netzwerkzugriff auf zentrale Informationen ermöglichen. Die dafür einzusetzenden Technologien entsprechen denen von "Internet-Mobiltelefonen".

Durch die personalisierte Mobilstation wird dieses Gerät einer Person zugeordnet. Die entsprechende Person kann in Datenbanken des Arbeitgebers einer Arbeitsgruppe zugehörig sein, die fachspezifische Informationen erhält; oder sie kann für einen Tag eine bestimmte Arbeitsortzugehörigkeit haben, so dass hier nur solche, einen gewissen Abschnitt unter Tage betreffende Informationen übermittelt werden. Gleiches gilt für ladbare Programme. Anstelle des Ladevorganges kann auch eine Freischaltung von gespeicherten Programmen vorgesehen sein.

Bei fest eingebauten Geräten (z.B. in Maschinen) ist unter Umständen keine Personalisierung erforderlich, da die Geräte einer Maschine und damit keiner Person zugeordnet sind. Ist eine Personalisierung vorgesehen, so kann diese naturgemäss erst erfolgen, wenn der Maschinenbediener auf der Maschine angekommen ist. Dann läuft folgender Prozess zur Personalisierung ab:
1. Bevor der Maschinenfahrer die Maschine in Betrieb setzen kann, muss er sich am Kommunikationsgerät identifizieren, indem er z.B. eine Kennung (z.B. Personalnummer) und einen PIN-Code eingibt.
2. Die Eingabe der Kennung kann entfallen, wenn elektronische Hilfsmittel (z.B. eine RFID basierte persönliche elektronische Kennkarte) Verwendung finden. Ist dies der Fall, so kann das Kommunikationsgerät solange automatisch auf den Mitarbeiter konfiguriert sein, wie dessen Kennkarte in einen Leser eingesteckt ist oder solange wie sich das RFID-Tag des Mitarbeiters in Reichweite des Kommunikationsgerätes befindet.
3. Optional gibt das Kommunikationsgerät nach erfolgter Identifizierung die Maschine frei (z.B. über einen Feldbus, Netzwerk oder ein Digitalsignal)
4. Erfolgt keine Identifizierung oder ist diese nicht nötig, dann ist der Maschinenfahrer während er die Maschine bedient nur über die Rufnummer der Maschine erreichbar.
5. Erfolgt eine Identifizierung, so wird über einen zentralen Server die Rufnummer des Mitarbeiters in das Gerät oder im Server einkonfiguriert und er ist solange auf diesem Gerät unter seiner Nummer erreichbar, wie er die Maschine bedient (Bis zum "Ausloggen"). Dabei kann er dieselben Funktionen und individuellen Konfigurationen und Programme nutzen, wie dies für ein mobiles Gerät der Fall ist.
6. Während der Arbeit ist der Mitarbeiter nun sowohl unter der Rufnummer der Maschine wie auch unter seiner persönlichen Rufnummer erreichbar, sofern sich die Maschine in Reichweite des drahtlosen Netzes befindet.
7. Am Ende der Schicht loggt sich der Bediener entweder aus oder er entfernt einfach seine elektronische Kennkarte aus dem Leser oder er entfernt sich für einen längeren Zeitraum aus der Reichweite des RFID-Lesegerätes. Alternativ stellt er einfach das Gerät in die Ladeeinheit, um es zu depersonalisieren.

Das Verfahren nutzt die drahtlose Infrastruktur im Untertagebauwerk um Daten, Bilder, Videos und Telefonate gebündelt und in digitaler Form zu einem mobilen Endgerät zu übertragen.

Das Verfahren wird eine untertägige Netzwerkinfrastruktur benötigen, für die mit einer vollständigen oder teilweisen Abdeckung auch ein drahtloser Zugang bereitsteht.

Das Verfahren kombiniert die Basisfunktion der drahtlosen Telefonie mit Zusatz- und Sicherheitsfunktionen zum Gegensprechen, Positionieren und z.B. Als "Totmannschalter" für den Untertagebetrieb wie z.B:
- Alle Geräte oder ausgewählte Gerätegruppen in Durchsagemodus ("Broadcast") schaltbar. Dabei können die Gruppen entweder aufgabenbezogen oder lokalitätsbezogen ausgewählt und aktiviert werden. Dient der aufgabenspezifischen oder einsatzortspezifischen Mitteilung von Nachrichten. Damit können z.B. im Notfall Grubenbereiche evakuiert werden oder Mitarbeiter auf enstehende Gefahren hingewiesen werden. Durch die aufgabenpezifische Mitteilung können z.B. Servicemitarbeiter gezielt angesprochen werden um z.B. eine Fehlerdiagnose in den weiträumigen Grubengebäuden gezielt und schnell durchführen zu können
- Was für die Durchsagen gilt, gilt in gleicher Weise auch für Mitteilungen z.B. in Text oder Bildform.
- Möglichkeit, Textmeldungen via Sprachsynthesizer vorlesen zu lassen. Dies kann hilfreich sein, da häufig beide Hände für die Arbeit benutzt werden und dadurch ein Gerät nicht sofort bedient werden kann.
- Leuchtzeichen zur Signalisierung von Mitteilungen oder Gesprächen (Grubenlampe blinkt) oder eine separate Leuchte im oder ausserhalb des Gerätes wird aktiviert.
- Vibrationsalarm
- Quittungsknopf zum Quittieren von Mitteilungen, die per Sprache oder Datenmessage empfangen wurden. Die Quittungen werden auf einem zentralen Rechner gesammelt und dienen dem Leitstandspersonal zur Kontrolle
- "Lebenszeichenmeldungen": Ein integrierter Bewegungssensor stellt fest, wenn sich das Gerät und damit die Person über einen bestimmten Zeitraum nicht bewegt haben. Dann wird am Gerät selbst Alarm ausgelöst. Wird dieser Alarm nicht von der zugehörigen Person quittiert, so wird in der Leitstelle ein Alarm ausgelöst, welcher über die Infrastruktur mit einer Positionsmeldung verbunden wird, um im Notfall z.B. eine verletzte Person finden zu können.
- Verknüpfung mit Maschinen und Geräten: Geräteverfolgung durch regelmässige Meldungen des Gerätes an einen zentralen Rechner oder durch Verfolgung des Gerätes über die Infrastruktur. Damit kann das Gerät z.B. als Zugfunksystem für untertägige Einrichtungen verwendet werden.
- Schnittstellen des Gerätes zur Maschine: Freigabe für Maschinenstart nach Einloggen, Notfallalarm, Rufsignalisierung, Signalisierung "Message empfangen".
- Da für die Textmessages und für die Bedienung ein Display notwendig sind, kann das Display auf Maschinen auch multifunktional verwendet werden: Das Verfahren sieht vor, dass auf dem Kommunikationsgerät verschiedene Anwendungssoftware ablaufen kann, welche das Gerät z.B. auch als einfaches Bedienterminal für eine Maschine oder für ausgewählte Maschinenfunktionen einsetzbar werden lassen.
- Einbau des Gerätes in "Wearable" devices, wie z.B. in ein Headset (Kombination aus Kopfhörer, Mikrofon und ggf. Kamera oder in das Helm- oder Batterieteil einer Grubenlampe sowie ggf. in Kleidungsstücke
- Variante mit Kamera um Situationen im Betrieb "einfangen" und später auf einen Rechner überspielen zu können sowie um diese Bilder unmittelbar an Kollegen weiterzugeben (z.B. zur Ersatzteilbeschaffung und zur Fehlerdiagnose)
- "PTT"- Funktion: Gegensprechfunktion (PTT für Push-totalk), welche entweder ein Gegensprechen auf Knopfdruck ("Halbduplexbetrieb") oder eine Konferenzschaltung mit einem weiteren oder mehreren Mitarbeitern ermöglicht, welche gleichzeitig an einer gemeinsamen Aufgabe arbeiten, wobei diese Aufgabe von verschiedenen Personen wahrgenommen wird, die an verschiedenen Orten ausserhalb der Rufreichweite arbeiten (z.B. an einer ggf. kilometerlangen Bandanlage oder in einem mehrere hundert Meter langen Streb). Diese Funktion ist über die Telefonsoftware einzurichten. Insbesondere kann die Sprache bei dieser Funktion über beispielsweise GPRS Verbindungen übermittelt werden.
- Fernüberwachung der "Handy"-Batterien durch einen Leitstand, so dass unterschieden werden kann, ob ein Handy abgeschaltet oder "tot" ist.
- Auswechseln der Handybatterien unter Tage (beispielsweise für Langschichten).
- Neupersonalisierung unter Tage (in Sonderfällen).
- Notfalltaste (Eintastenfunktion): Längerer Druck auf die Taste (z.B. mehr als drei Sekunden) führt unmittelbar zum Aufbau einer Telefonverbindung höchster Priorität mit einer zentralen Stelle, in der unmittelbar auch der Standort der meldenden Person angezeigt wird. In dieser Betriebsart entsteht eine Vollduplexverbindung zwischen der Einsatzzentrale und dem meldenden Endgerät.

Zudem kann ein Verfahren wie folgt gewählt werden: Zwei oder mehr Geräte werden in festen Gruppen (z.B. über eine Datenbank konfiguriert) oder dynamisch (s.u.) zu "PTT"-Gruppen zusammengeschaltet. PTT bedeutet in diesem Sinne ein reines Wechselsprechen im Halbduplexbetrieb oder Telefonkonferenzbildung im vollduplexbetrieb.

Der Wechselsprechbetrieb wird auch heute noch von den meisten Benutzern bevorzugt, da der Lautsprecher stummgeschaltet ist, wenn niemand die Sprechtaste betätigt oder durch seine eigene Stimme die Sprechtaste stimmgesteuert betätigt wird. Daher braucht der Benutzer auch nicht auf (teilweise sehr laute) Nebengeräusche von Motoren und Maschinen zu hören, um daraus mühsam die Stimme eines Kollegen ausfiltern zu müssen.

Das Verfahren läuft dabei folgendermassen ab:

### Gruppenauswahl

1. Alternative 1: Statische Konfiguration einer PTT - Gruppe: Im Menü des Telefons wird eine vorbereitete Gruppe ausgewählt, die in Dateien oder Datenbanken auf einem zentralen Server festgelegt sind. Alle Teilnehmer an einer Gruppe wählen die Gruppe aus und sind danach über einfaches Drücken der Sprechtaste miteinander verbunden: Einer drückt die Sprechtaste und alle anderen hören den Sprecher.
2. Alternative 2: Dynamische Konfiguration einer PTT-Gruppe: Die Gruppe trifft sich (z.B. vor dem Einsatz) an einem gemeinsamen Punkt - z.B. in der Nähe eines gemeinsamen Accesspoints. Um die Gruppe zu bilden, drücken alle gleichzeitig für z.B. mindestens 3 oder 5 Sekunden eine Taste (z.B. die Sprechtaste).
   Der zentrale Rechner oder der Accesspoint oder aber auch die Geräte ohne eine zentrale Hilfe untereinander erkennen dies und verbinden sich gegenseitig automatisch in einer "PTT-Gruppe". Diese Auswahl kann automatisch aufgefrischt werden, beispielsweise, wenn Mitarbeiter sich nur zeitweilig arbeitstechnisch in der Nähe eines solchen Accesspoints aufhalten.
3. Alternative 3: Manuelle Konfiguration: Die Telefonnummern der Teilnehmer in einer PTT-Gruppe werden in jedem Telefon manuell eingegeben oder aus einem Menü ausgewählt.

Das erfolgreiche Bilden einer PTT-Gruppe wird von den Telefonen akustisch und/oder optisch quittiert. Die aktive Gruppe wird im Display angezeigt.

In einem Telefon können gleichzeitig mehrere PTT-Gruppen aktiviert sein.

Für Aufsichtspersonal können mehrere PTT-Gruppen aktiviert sein, welche nur zum Mithören aktiviert werden. Wird in mehreren Gruppen gleichzeitig gesendet, so hört der Mitarbeiter nur die Stimme derjenigen Gruppe, der er selbst die höchste Priorität zugeordnet hat.

### Gegensprechbetrieb

Ist die Gruppeneinstellung erfolgt, trennen sich die Personen und verteilen sich zu ihrer gemeinsamen Arbeit z.B. an einer langen Bandstrasse, im Abbau oder in den Tunneln (Strecken). Immer wenn sie sich in Reichweite einer Funkabdeckung befinden, haben sie Zugang zum gemeinsamen Funknetz in der Gruppe:

Im Gegensprechbetrieb drückt eine Person die Sprechtaste (wie bei einem Funkgerät) und alle anderen Geräte der Gruppe hören die Stimme des Sprechenden.

Alle Geräte einer PTT-Gruppe arbeiten somit quasi auf einem "virtuellen Funkkanal" innerhalb des (drahtlosen) und drahtgebundenen Netzwerkes.

Das Drücken der Sprechtaste kann auch durch eine Sprachsteuerung ersetzt werden, die beim lauten Sprechen automatisch die Sprechfunktion aktiviert. Dies kann in einem Menü ausgewählt werden.

Auf Wunsch kann (z.B. bei sicherheitskritischen Operationen) der Sprechfunkverkehr ähnlich wie bei Feuerwehr und Polizei in einer zentralen Stelle (Server) aufgezeichnet werden. Die Aufzeichnungen sind dann im Unglücksfall von berechtigten Personen nachträglich abspielbar.

Technisch erfolgt das Einrichten einer PTT-Gruppe vorzugsweise nach dem folgenden Verfahren:
1. Da der zentrale Telefonieserver meist bereits in der Lage ist, Telefonkonferenzen zu bilden, wird eine PTT-Gruppe im zentralen Rechner als Telefonkonferenz eingerichtet. Dies hat den Vorteil, dass im Telefon keinerlei Hardwareänderungen notwendig sind.
2. Im Telefon selbst ist das Mikrofon im PTT-Betrieb stummgeschaltet, um zu verhindern, dass alle Teilnehmer der Gruppe permanent mit allen Neben- und Betriebsgeräuschen überfrachtet werden.
3. Drückt ein Teilnehmer seine Sprechtaste am Mobilgerät, am Headset oder aktiviert er den Sprechkanal durch ein sprachgesteuertes Mikrofon so wird seine Sprache freigeschaltet und allen Teilnehmern der PTT-Gruppe übermittelt.

Für sicherheitskritische Anwendungen kann im zentralen Server ggf. Auch eine Mitschnittfunktion ("Voice-Recorder") für PTT-Gruppen eingerichtet werden

### Deaktivieren

Jeder Teilnehmer einer Gruppe kann sich explizit über das Menü aus der Gruppe abmelden.

### Anwendungsprogramme

Jeder Benutzer unter Tage hat einen bestimmten Verantwortungsbereich mit individuellen Einsatzaufgaben. Oft wäre es sinnvoll, wenn diese Arbeitsaufgaben durch einfache Computerprogramme unterstützt werden könnten. Dies gilt beispielsweise für die untertägigen Vermesser (Markscheider) oder auch für Wartungspersonal und Elektriker:

Diese und andere können spezielle, für ihren persönlichen Arbeitsbereich erstellte Anwendungsprogramme auf ihr Kommunikationsgerät laden. Dieses Laden der Programme kann direkt bei der Personalisierung der Telefone vor Beginn der Schicht automatisch erfolgen; sie können auch in einem in der Mobilstation vorgesehenen Speicher abgelegt sein und an die Stelle des Ladens steht dann das Freigeben der entsprechenden Verzeichnisse und Berechtigungen zur Ausführung dieser (dann vorhandenen) Programme:

Derartige Anwendungen können beispielsweise sein:
- Markscheider erhalten Vermessungsprogramme und Datenerfassungsprogramme auf das Gerät aufgespielt, welche für die Vermessung benötigte Daten aus zentralen Datenbanken darstellen und neu erfasste Vermessungsdaten an die Datenbanken weiterleiten können.
- Wartungspersonal kann ähnlich wie mit einem Mobiltelefon eine Internetverbindung aufgebaut wird Informationen aus zentralen Datenbanken abrufen und z.B. Ersatzteilbestellungen absetzen. Gleichzeitig stehen Rechenfunktionen im Gerät zur Verfügung.
- Auf Maschinen, auf denen (ggf. bewusst) auf ein Display verzichtet wird, kann ein Programm auf dem Mobiltelefon des Maschinenfahrers Meldungen von der Maschine darstellen, die über das drahtlose Netzwerk an das Mobiltelefon des Fahrers übermittelt werden. Dies hört sich ggf. etwas umständlich an, kann aber unter den herrschenden Umweltbedingungen sehr sinnvoll sein, da fest installierte Geräte den Umgebungsbedingungen oft nur sehr kurze Zeit gewachsen sind.

In vielen Fällen sind die Maschinen auch so gross (z.B. Hobelanlagen oder Bandstrassen), dass sich die Bediener oder das Wartungspersonal gar nicht an der Maschine selbst aufhalten (können). In diesem Fall kann das Mobiltelefon des Bedieners oder des Wartungspersonals zur Darstellung von Betriebsinformationen, Warnungen, Alarmen und Wartungsmeldungen dienen.

Da das Aufladen der Batterien mit Kontakten sehr fehleranfällig ist wird für das Gerät eine kontaktlose, induktive Übertragung des Ladestroms bevorzugt.

## Patentansprüche

1. Verfahren zur drahtlosen Untertagedatenübertragung zwischen einer Vielzahl von Mobilstationen und einem stationären Netzwerk, wobei jede Mobilstation jeweils wenigstens eine Sende- und Empfangseinrichtung aufweist, wobei die Datenübertragung zwischen der Mobilstation und dem stationären Netzwerk drahtlos über wenigstens eine Basisstation erfolgt, und wobei jede Mobilstation über eine der jeweiligen Mobilstation zugeordneten gerätespezifischen Kennung erreichbar ist, mit den Verfahrensschritten
- des entpersonalisierten Lagerns jeder personalisierfähigen Mobilstation vor ihrem Einsatz in einer Lagerstation, vorteilhafterweise in einer Ladestation,
- des Personalisierens jeder Mobilstation vor, bei oder nach der Entnahme aus der Lagerstation über eine der Mobilstation zugeordneten Personalisierungseinrichtung, so dass die besagte Mobilstation neben der zugeordneten gerätespezifischen Kennung auch über eine personalisierte Benutzerkennung erreichbar ist,
- des Entpersonalisierens jeder Mobilstation bei Rückgabe in die Lagerstation über die der Mobilstation zugeordneten Personalisierungseinrichtung,
- **gekennzeichnet dadurch, daß** die funktionelle Freigabe der Mobilstation oder einer besagten Maschine erst nach erfolgreicher Personalisierung der zugeordneten Mobilstation erfolgt,
- wobei jede personalisierte Mobilstation einen von einer Steuereinrichtung gesteuerten Bewegungssensor umfasst, mit dem kontinuierlich oder intermittierend Bewegungen der Mobilstation erfasst werden und wobei bei Abwesenheit von solchen Bewegungen über einen vorbestimmten Zeitraum die Steuereinrichtung eine automatische Alarmmeldung an das stationäre Netzwerk übermittelt.

2. Verfahren nach Anspruch 1, wobei die automatische Alarmmeldung an das stationäre Netzwerk mit einer Positionsmeldung der Mobilstation versehen wird.

3. Verfahren nach Anspruch 1 oder 2, wobei die Steuereinrichtung verbunden oder gleichzeitig mit einer Alarmmeldung an das stationäre Netzwerk selber eine von aussen wahrnehmbare optische, akustische oder mechanische Warnmeldung abgibt, die den Benutzer der Mobilstation einlädt, den Alarm zu quittieren, wobei die Steuereinrichtung das Ergebnis davon an das stationäre Netzwerk zur Erledigung oder Aktivierung des Alarms übermittelt oder nur bei Nichtbetätigung der Quittungsfunktion einen Alarm auslöst.

4. Verfahren nach einem der Ansprüche 1 bis 3, wobei die Mobilstation in einer beweglichen oder unbeweglichen Maschine eingebaut ist und die Personalisierung bei Anschalten der Maschine durchgeführt wird oder die kombinierte Entpersonalisierung und Neu-Personalisierung bei einer Schichtübergabe durchgeführt wird.

5. Verfahren nach einem der Ansprüche 1 bis 4, wobei die Personalisierung durch Übermittlung einer persönlichen Nutzerkennung an die Mobilstation vorgenommen wird, wobei die persönliche Nutzerkennung einen vom Benutzer einzugebenden oder einen elektronisch übermittelbaren benutzerspezifischen Code umfasst.

6. Verfahren nach einem der Ansprüche 1 bis 5, wobei in jede personalisierte Mobilstation bei Personalisierung zu der entsprechenden Person selber einzeln zugehörige oder arbeitsgruppenzugehörige oder arbeitsortzugehörige ausgebbare Informationen oder ausführbare Programme in einen bestehenden flüchtigen oder nichtflüchtigen Speicher der Mobilstation übermittelt und geladen werden.

7. Verfahren nach einem der Ansprüche 1 bis 6, bei dem eine Freischaltung der Mobilstation durch die Übertragung von nutzerbezogener Information durch die Personalisierungseinrichtung oder durch eine Basisstation erfolgt.

8. Verfahren nach Anspruch 7, bei dem auf der Mobilstation befindliche nutzerbezogene Information bei der Entpersonalisierung gelöscht wird oder, insbesondere, wenn es während der Benutzung veränderte nutzerbezogene Information ist, in der Personalisierungseinrichtung oder in einer Basisstation gespeichert wird.

9. Mobilstation zur Kommunikation über ein Funknetzwerk mit einem stationären Netzwerk für ein Verfahren nach einem der Ansprüche 1 bis 8, mit wenigstens einer Sende- und Empfangseinrichtung, die ausgestaltet ist, um mindestens mit Basisstationen des Funknetzwerkes kommunizieren zu können, **dadurch gekennzeichnet, dass** die Mobilstation eine Personalisierungseinrichtung in Gestalt einer durch ein Radiofrequenz-Tag (RFID-Tag) schaltbaren Radiofrequenz-Empfänger zur Erkennung eines elektronisch übermittelbaren benutzerspezifischen Code aufweist und weiterhin einen von einer Steuereinrichtung gesteuerten Bewegungssensor zur kontinuierlichen oder intermittierenden Erfassung von Bewegungen der Mobilstation umfasst, wobei bei Abwesenheit von solchen Bewegungen über einen vorbestimmten Zeitraum mit der Steuereinrichtung eine automatische Alarmmeldung, ggf. mit einer Positionsmeldung der Mobilstation, an das stationäre Netzwerk übermittelbar ist.

10. Mobilstation nach Anspruch 9, weiterhin umfassend entweder einen zur Aussenwahrnehmung einer Alarmmeldung vorgesehenen optischen, akustischen oder mechanischen Anzeiger, oder einen Kurzweitenfunkübertrager zur Übertragung eines Steuersignals an einen externen Empfänger mit zur Aussenwahrnehmung einer Alarmmeldung vorgesehenen optischen, akustischen oder mechanischen Anzeiger.

11. Mobilstation nach einem der Ansprüche 9 oder 10, **dadurch gekennzeichnet, dass** die Mobilstation zusätzlich eine halb- oder vollduplex Gegensprechanlage zur direkten Kommunikation mit benachbarten Mobilstationen aufweist.

## Claims

1. A method for wireless underground data transmission between a multiplicity of mobile stations and a fixed network, wherein each mobile station respectively has at least one transmission and reception device, wherein the data transmission between the mobile station and the fixed network takes place wirelessly via at least one base station, and wherein each mobile station can be reached by means of an appliance-specific identifier associated with the respective mobile station, comprising the method steps:
- of depersonalized storage of every personalization-compatible mobile station, prior to its use, in a storage station, advantageously in a charging station,
- of personalization of every mobile station before, during or after removal from the storage station by means of a personalization device associated with the mobile station, so that said mobile station can be reached not only by means of the associated appliance-specific identifier but also by means of a personalized user identifier,
- of depersonalization of every mobile station upon return to the storage station by means of the personalization device associated with the mobile station,
**characterized in that**
- the mobile station or an aforementioned machine has its functions enabled only after successful personalization of the associated mobile station,
- wherein every personalized mobile station comprises a motion sensor which is controlled by a control device and which is used to continuously or intermittently detect movements by the mobile station, and wherein if such movements are absent over a predetermined period then the control device transmits an automatic alarm to the fixed network.

2. The method as claimed in claim 1, wherein the automatic alarm to the fixed network is provded with a position report from the mobile station.

3. The method as claimed in claim 1 or 2, wherein the control device sends, in combination with or at the same time as an alarm to fixed network itself, an externally perceptible visual, audible or mechanical warning which invites the user of the mobile station to acknowledge the alarm, wherein the control device transmits the result thereof to the fixed network to handle or activate the alarm or initiates an alarm only if the acknowledgement function is not activated.

4. The method as claimed in one of claims 1 to 3, wherein the mobile station is incorporated in a moving or nonmoving machine and the personalization is performed when the machine is switched on, or the combined depersonalization and re-personalization is performed upon shift handover.

5. The method as claimed in one of claims 1 to 4, wherein the personalization is performed by transmitting a personal user identifier to the mobile station, wherein the personal user identifier comprises a user-specific code which needs to be input by the user or which can be transmitted electronically.

6. The method as claimed in one of claims 1 to 5, wherein every personalized mobile station, upon personalization, has outputtable information, individually associated with the relevant person himself or associated with workgroups or associated with work locations, or executable programs transmitted and loaded into an existing volatile or nonvolatile memory in the mobile station.

7. The method as claimed in one of claims 1 to 6, in which the mobile station is enabled by virtue of the transmission of user-related information by the personalization device or by a base station.

8. The method as claimed in claim 7, in which user-related information present on the mobile station is deleted during depersonalization or, particularly if it is user-related information which is altered during use, is stored in the personalization device or in a base station.

9. A mobile station for communication via a radio network with a fixed network for a method as claimed in one of claims 1 to 8, having at least one transmission and reception device which is designed to be able to communicate at least with base stations in the radio network, **characterized in that** the mobile station has a personalization device in the form of a radio frequency receiver, which can be switched by a radio frequency tag (RFID tag), for identifying an electronically-transmittable user-specific code, and also comprising a motion sensor, controlled by a control device, for continuously or intermittently detecting movements by the mobile station, wherein if such movements are absent over a predetermined period then the control device can be used to transmit an automatic alarm, possibly with a position report from the mobile station, to the fixed network.

10. The mobile station as claimed in claim 9, also comprising either a visual, audible or mechanical indicator provided for external perception of an alarm or a shorthaul radio transmitter for transmitting a control signal to an external receiver with a visual, audible or mechanical indicator provided for external perception of an alarm.

11. The mobile station as claimed in one of claims 9 or 10, **characterized in that** the mobile station additionally has a half-duplex or full-duplex installation for direct communication with adjacent mobile stations.

## Revendications

1. Procédé pour la communication souterraine entre une pluralité de stations mobiles et un réseau stationnaire, où chaque station mobile comporte au moins un dispositif de transmission et de récepteur, où la transmission de données entre la station mobile et le réseau stationnaire est exécuté sans fil par au moins une station de base, où au moins chaque station mobile peut-être joint par un identificateur spécifique au dispositif accordé à la station mobile correspondent, avec les étapes
- stocker, d'une manière non-personnalisé, chaque station mobile qui peut être personnalisée, avant son utilisation dans une station de stockage, préférablement dans une station de recharge,
- personnaliser chaque station mobile avant, pendant ou après le retrait de la station de stockage par un dispositif de personnalisation associé à la station mobile, pour que ladite station mobile peut être joint aussi bien par l'identificateur spécifique au dispositif que par un identificateur d'utilisateur personnalisé,
- dépersonnaliser chaque station mobile lors du retour à la station de stockage par ledit dispositif de personnalisation associé à la station mobile,
**caractérisé en ce que**
- le déverrouillage fonctionnel de la station mobile ou d'une machine associé se fait qu'après une personnalisation avec succès de la station mobile associé,
- où chaque station mobile personnalisée comporte un détecteur de mouvement contrôlé par une unité de contrôle, avec lequel un mouvement de la station mobile continu ou intermittent peut être détecté et où, lors d'une absence de tels mouvements pour une période prédéterminée, l'unité de contrôle transmet automatiquement un message d'alarme au réseau stationnaire.

2. Procédé selon la revendication 1, où l'alarme automatique, transmis au réseau stationnaire, est accompagné d'un message de position de la station mobile.

3. Procédé selon la revendication 1 ou 2, où l'unité de contrôle prévoit d'envoyer en même temps que ou accompagné avec le message d'alarme destiné au réseau stationnaire un message d'avertissement optique, acoustique ou mécanique, apercevable de l'extérieur, invitant l'utilisateur de la station mobile d'accuser réception de l'alarme, où l'unité de contrôle transmet le résultat du règlement ou de l'activation de l'alarme et ne déclenché l'alarme que si la fonction d'acquittement n'as pas été actionnée.

4. Procédé selon l'une des revendications 1 à 3, où la station mobile est prévue dans une machine mobile ou immobile et ou la personnalisation est effectuée lors de l'allumage de la machine ou la dépersonnalisation et répersonnalisation combinée est effectué lors d'un changement d'équipé.

5. Procédé selon l'une des revendications 1 à 4, où la personnalisation est effectuée par transmission d'un identificateur personnel à la station mobile, où l'identificateur personnelle comprend un code à présenter par l'utilisateur ou un code spécifique à l'utilisateur qui peut être transmis d'une manière électronique.

6. Procédé selon l'une des revendications 1 à 5, où des informations ou des programmes à exécuter, associés à une personne spécifique ou à une équipe ou à un endroit de travail, sont transmis dans une mémoire existante, volatile ou non-volatile de la station mobile lors de la personnalisation de la station mobile, et sont ensuite chargés.

7. Procédé selon l'un des revendications 1 à 6, où la mise en service de la station mobile est effectué par la transmission d'information se rapportant à l'utilisateur par le dispositif de personnalisation ou par la station de base.

8. Procédé selon la revendication 7, où des informations existantes sur la station mobile et se rapportant à un utilisateur spécifique sont radiées lors de la dépersonnalisation ou, en particulier, si il s'agit d'une information se rapportant à l'utilisateur qui a été changée lors de l'utilisation, sont mémorisées dans le dispositif de personnalisation ou dans une station de base.

9. Station mobile pour la communication sur un réseau sans fil avec un réseau stationnaire par un procédé selon l'une des revendications 1 à 8, avec au moins un dispositif de transmission et de récepteur, adapté pour communiquer au moins avec des stations de base du réseau sans fil, **caractérisée en ce que** la station mobile comprend un dispositif de personnalisation en forme de récepteur de fréquence radio connectable par une radio-étiquette (RFID-tag) pour détecter un code spécifique à un utilisateur, qui peut être transmis électroniquement, et comprend aussi un détecteur de mouvement contrôlé par une unité de contrôle pour détecter des mouvements de la station mobile continues ou intermittents, où lors d'une absence de tels mouvements pour une période prédéterminée, l'unité de contrôle transmet automatiquement un message d'alarme au réseau stationnaire, en particulier accompagné d'un message de position de la station mobile.

10. Station mobile selon la revendication 9, comprenant aussi soit un indicateur optique, acoustique ou mécanique prévu pour être apercevable par l'extérieur lors de la transmission d'un message d'alarme, ou un transmetteur sans fil pour ondes courtes pour transmettre un signal de contrôle au récepteur externe avec un indicateur optique, acoustique ou mécanique.

11. Station mobile selon les revendications 9 ou 10, **caractérisée en ce que** la station mobile comprend en plus un interphone en semi-duplex ou duplex pour une communication directe entres des stations mobiles adjacentes.
